# EUROPÄISCHE PATENTANMELDUNG

(11) **EP 1 749 698 A2**
(43) Veröffentlichungstag der Anmeldung: **07.02.2007**
(21) Anmeldenummer: 06015795.5
(22) Anmeldetag: 28.07.2006
(51) Int. Cl.: B60R 5/04

(54) **Laderaumabtrennung**

(30) Priorität: 02.08.2005 DE 102005036805; 02.08.2005 US 195215
(71) Anmelder: Intier Automotive Eybl (Germany) GmbH, 92442 Wackersdorf (DE)
(72) Erfinder: Wagner, Josef, 81373 München (DE)

(57) **Zusammenfassung**

Zur Vereinfachung des Gebrauchs eines Kraftfahrzeugs 1 wird eine Laderaumabtrennung für dessen erweiterbaren Laderaum 2, 3 vorgeschlagen mit zwei Trennelementen 5, 16, wobei an dem ersten Trennelement 5 benachbart zu dessen Längskanten Verriegelungs- oder Rastmittel 8 vorgesehen sind, durch die im Zusammenwirken mit weiteren Rast- bzw. Verriegelungsmitteln am zweiten Trennelement 16 zwei Scharnierverbindungen herstellbar sind.

## Beschreibung

Die vorliegende Erfindung betrifft eine Lade- oder Gepäckraumabtrennung für den Laderaum eines Fahrzeugs, insbesondere eines Kombinations-Personenkraftwagen.

Kombinations-Personenkraftwagen weisen einen Laderaum mit annähernd der Höhe der Fahrgastzelle auf und sehen vor, die Rücksitze beispielsweise durch Umklappen der Rücksitzlehnen zu verstauen, um den Platz im Bereich der Rücksitzbank als zusätzlichen Laderaum zu nutzen. Es ist aus der EP 1 283 130 A2 bekannt, in einem Kombinations-Personenkraftwagen hinter der Rücksitzreihe oder Rücksitzbank mehrere Abdeckungen als Laderaumabtrennung anzubringen. Diese verhindern im Falle eines Bremsmanövers oder eines Zusammenpralls mit einem Hindernis, dass Gepäckstücke aus dem Laderaum in den Bereich der Fahrgäste geschleudert werden. Es sind mehrere Abdeckungen erforderlich, um den verschiedenen Benutzungsarten eines Kombinations-Personenkraftwagen entsprechen zu können. Wenn der Laderaum nicht oder nur wenig gefüllt ist, genügt ein horizontales Trennelement in der Art einer Abdeckung auf der Höhe der Oberkante der Lehne der Rücksitze oder der Rücksitzbank. Diese Art der Abdeckung beeinträchtigt die Sicht des Fahrers durch die Heckscheibe nicht. Falls der Laderaum oberhalb der Oberkante der Lehne der Rücksitze oder Rücksitzbank genutzt wird, ist es zweckmäßig, in geringem Abstand hinter der Lehne der Rücksitze oder Rücksitzbank eine vertikale, sich in der gesamten Fahrzeugbreite bis zum Dachhimmel erstreckende Abtrennung vorzusehen. Ein solches Trennelement ist in der Regel als Netz oder vergleichbares teildurchsichtiges Flächengewirke ausgestaltet. Je nach Gebrauchssituation lässt sich die nicht benötigte Abdeckung der Laderaumabtrennung in aufgerolltem Zustand verstauen.

Diese beschriebenen und vergleichbare bekannte Laderaumabtrennungen für Kombinations-Personenkraftwagen haben den Nachteil, dass sie nicht oder nur nach einem aufwändigen Umbau für die sichere Abtrennung des durch Umlegen der Rückenlehne der Rücksitze oder der Rücksitzbank erweiterten Laderaums geeignet sind.

Die vorliegende Erfindung stellt sich daher die Aufgabe, eine Laderaumabtrennung für den erweiterbaren Laderaum eines Kraftfahrzeugs zu schaffen, die besonders einfach an die verschiedenen Nutzungsweisen anpassbar ist.

Diese Aufgabe wird unter einem ersten Aspekt gelöst durch eine Laderaumabtrennung mit den in Anspruch 1 angegebenen Merkmalen. Unter einem weiteren Aspekt wird diese Aufgabe gelöst durch eine Fahrzeuginnenausstattung mit den in Anspruch 10 angegebenen Merkmalen.

Erfindungsgemäß weist eine Laderaumabtrennung für den erweiterbaren Laderaum eines Kraftfahrzeugs zwei Trennelemente auf, wobei an dem ersten Trennelement benachbart zu dessen Längskanten Verriegelungs- oder Rastmittel vorgesehen sind, durch die im Zusammenwirken mit weiteren Rast- bzw. Verriegelungsmitteln am Trennelements zwei Scharnierverbindungen herstellbar sind. Dabei sind die weiteren Rast- bzw. Verriegelungsmittel an dem zweiten Trennelement vorzugsweise in dessen Mittelebene oder auf dessen Oberfläche angeordnet.

Vorzugsweise verlaufen bei der erfindungsgemäßen Laderaumabtrennung die Schwenkachsen der lösbaren Scharnierverbindungen im wesentlichen parallel und sind zueinander beabstandet.

Zudem weist zweckmäßig das erste Trennelement im wesentlichen parallel verlaufende Längskanten auf, an denen die Verriegelungs- oder Rastmittel angeordnet sind. Insbesondere kann ein Trennelement flach trapezförmig oder rechteckig sein.

Falls an einer Längskante des ersten Trennelement die Verriegelungsmittel vorgesehen sind, ist dort weiterhin vorzugsweise eine Handhabe ausgebildet, die ein Betätigungsmittel zum Betätigen der Verriegelungsmittel einschließt.

Besonders vorzugsweise ist eine solche Kombination von Handhabe und Betätigungsmittel durch einen ausgeschnittenen Handgriff und eine mit den Verriegelungsmitteln zusammenwirkende drehbare Griffhülse ausgestaltet.

Hierbei ist es zweckmäßig, wenn die Verriegelungsmittel an dem ersten Trennelement einen federbelasteten Riegelbolzen umfassen, der über eine Drehkulisse durch die drehbare Griffhülse betätigbar ist.

Weiterhin kann das zweite Trennelement an einer seiner Längskanten Scharniermittel zur verschwenkbaren Anbindung an die Karosserie oder ein Innenausstattungsteil eines Kraftfahrzeugs aufweisen.

Bei der Anordnung der Laderaumabtrennung in einem Kraftfahrzeug mit einer Rücksitzbank ist die Laderaumabtrennung mit den erwähnten Scharniermitteln vorzugsweise im Bereich der Rücksitzlehne mit der Rücksitzbank verbunden.

Falls hierbei die Rücksitzbank zwei unabhängig voneinander verstellbare Einzelsitze und ein sich zwischen deren Rücksitzlehnen erstreckendes Mittelteil umfasst, wird die Laderaumabtrennung vorzugsweise daran verschwenkbar angebracht sein.

Die erfindungsgemäße Laderaumabtrennung weist vorteilhaft eine hohe mechanische Stabilität auf und kann mehrere Anordnungen einnehmen, um nahezu sämtlichen denkbaren Benutzungsweisen eines Kombinations-Personenkraftwagens gerecht zu werden. Zudem eignet sich die erfindungsgemäße Laderaumabtrennung für eine Ausgestaltung zur Unterstützung der einhändigen Bedienung. Weiterhin lässt sich die erfindungsgemäße Laderaumabtrennung bei Nichtgebrauch auf sehr kleinem Raum verstauen.

Eine bevorzugte Ausführungsform der vorliegenden Erfindung für ein Kombinations-Kraftfahrzeug wird nachfolgend mit Bezug auf die beigefügten Zeichnungen erläutert. Darin zeigen:
- Fig. 1: eine perspektivische Ansicht auf den Gepäckraum eines Kombinations-Personenkraftwagen mit einer Laderaumabtrennung gemäß der vorliegenden Erfindung;
- Fig. 2: die perspektivische Ansicht auf den Gepäckraum eines Kombinations-Personenkraftwagen gemäß Fig. 1, wobei sich die Laderaumabtrennung in einer anderen möglichen Anordnung befindet;
- Fig. 3: die perspektivische Ansicht auf den Gepäckraum eines Kombinations-Personenkraftwagens gemäß Fig. 1, wobei sich die Laderaumabtrennung in noch einer anderen Anordnung befindet;
- Fig. 4: der Gepäckraum des Kombinations- Personenkraftwagens gemäß Fig. 1 in perspektivischer Ansicht, wobei die Rücksitzlehnen zur Nutzung des gesamten erweiterbaren Laderaums abgelegt sind;
- Fig. 5 bis 13: eine Schnittansicht durch den Kombinations-Personenkraftwagen mit der Laderaumabtrennung in verschiedenen möglichen Anordnungen;
- Fig. 14: eine perspektivische Ansicht der Handhabe und der Verriegelung zwischen den Trennelementen der Laderaumabtrennung; und
- Fig. 15: eine vergrößerte Ausschnittsansicht der Handhabe und der Betätigungsmechanik gemäß Fig. 14.

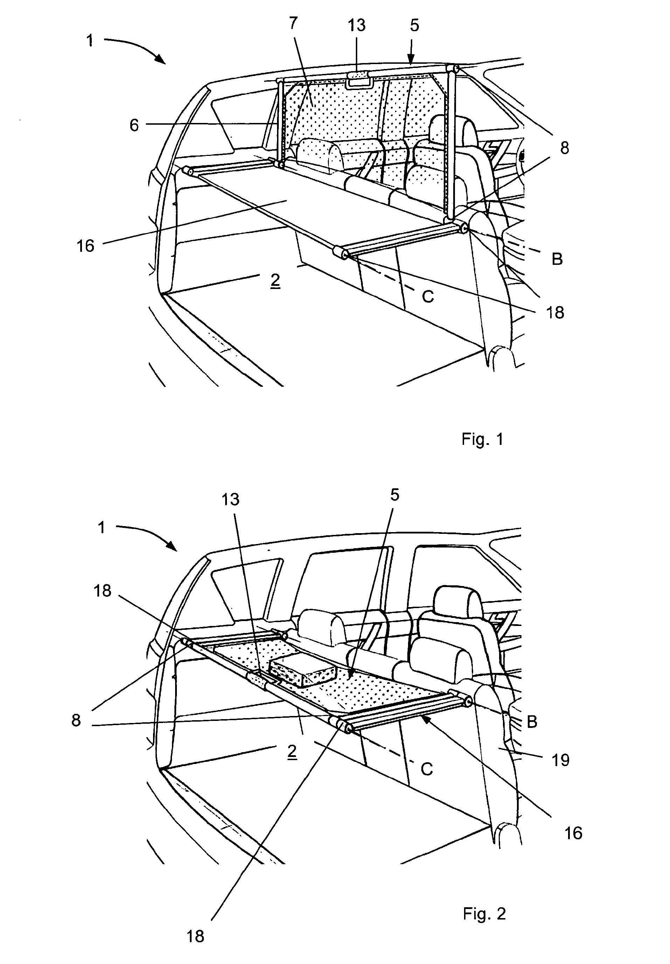

Ein Kombinations-Personenkraftwagen 1 weist gemäß den Fig. 1 bis 4 im hinteren Bereich einen Laderaum 2 zur Unterbringung von Ladegut auf. Vor dem Laderaum 2 befindet sich ein weiterer Raum 3, der dazu vorgesehen und eingerichtet ist, alternativ oder gleichzeitig Personen und/oder Ladegutstücke aufzunehmen. In diesem weiteren Raum 3 ist als Teil der Fahrzeugausstattung ein Rücksitz oder eine Rücksitzbank 19 enthalten. Der Rücksitz oder die Rücksitzbank 19 weist eine um die Achse A schwenkbare Rückenlehne 20 auf. Auf diese Art kann der Rücksitz oder die Rücksitzbank 19 durch Ablegen der Rückenlehne 20 auf kleinem Raum verstaut werden. Der Laderaum 2 und der weitere Raum 3 bilden in diesem Fall den erweiterten Laderaum 2,3.

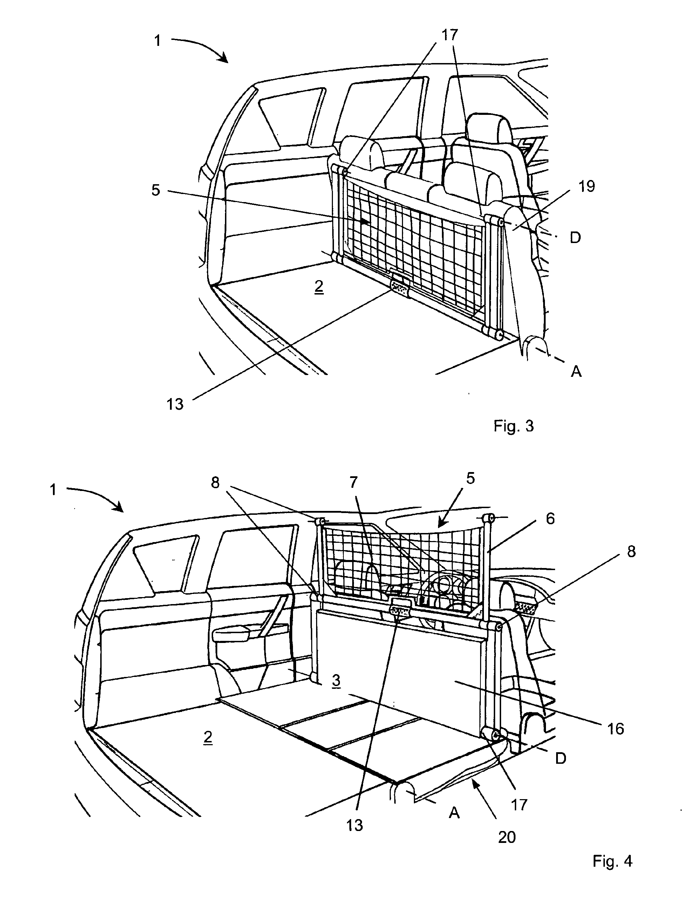

Ein Bestandteil der Fahrzeuginnenausstattung ist die erfindungsgemäße Laderaumabtrennung 4. Diese umfasst zwei vorzugsweise ebene, rechteckige oder trapezförmige Trennelemente 5, 16. Gemäß insbesondere den Fig. 1 und 4 ist das erste Trennelement 5 vorzugsweise in der Art eines Gitters oder eines mit einem Netz 7 bespannten Rahmens 6 ausgestaltet. Das zweite Trennelement 16 hingegen ist vorzugsweise in der Art einer gepolsterten durchgehenden Platte ausgebildet.

Das erste Trennelement 5 weist benachbart zu seinen vorzugsweise parallelen Längskanten Verriegelungsmittel 8 auf, die mit korrespondierenden Rastmitteln 18 an der Oberseite des zweiten Trennelements 16 in Eingriff bringbar sind und dabei eine Scharnierverbindung 8, 18 zwischen den beiden Trennelementen 5, 16 bewirken. Die durch diese Scharnierverbindungen 8, 18 definierten Schwenkachsen B, C verlaufen in der vorgesehenen Einbaulage der Laderaumabtrennung 4 vorzugsweise im wesentlichen horizontal und quer zur Fahrzeuglängsrichtung ausgerichtet. Falls die an beiden Längskanten des ersten Trennelements 5 vorgesehenen Verriegelungsmittel 8 mit den entsprechenden Rastmitteln 18 in Eingriff stehen, sind die beiden Trennelemente 5, 16 fest, d.h. unbewegbar, miteinander verbunden.

Die erwähnten Verriegelungsmittel 8 können im einfachsten Fall Riegelstangen oder - bolzen 11 sein, die in ihrer Längsrichtung verschiebbar an dem ersten Trennelement 5 gehalten sind. Dementsprechend können die Rastmittel 18 in der Art von Bohrungen oder Ausnehmungen in seitlichen Haltekörpern oder dergleichen angelegt sein.

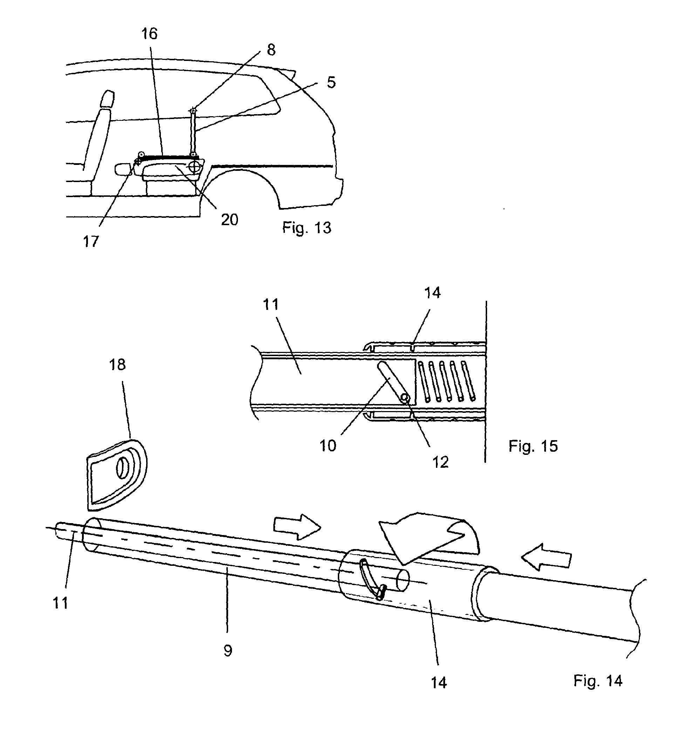

Natürlich können ohne Beeinträchtigung der dargestellten Funktion die Verriegelungs- und Rastmittel 8, 18 auch gegeneinander ausgetauscht sein. Jedoch hat sich die beschriebene Anordnung von Verriegelungs- und Rastmitteln 8, 18 als besonders zweckmäßig herausgestellt, um die Laderaumabtrennung 4 für die Erfordernisse einer einhändigen Betätigung auszugestalten. Hierzu ist an einer Längskante des erstens Trennelements 5 eine Handhabe 13 wie beispielsweise der dargestellte ausgesparte Griff 13 vorgesehen. Diese Handhabe 13 schließt zweckmäßig eine Betätigung 14 für die zu dieser Längskante zugeordneten Verriegelungsmittel 8 ein. Die dargstellte und beschriebene Ausführungsform einer Laderaumabtrennung 4 sieht insbesondere vor, den Griff 13 drehbar zu gestalten und die Betätigung der Verriegelungsmittel 8 an die Drehbewegung des Griffs 13 zu koppeln. Dies kann beispielsweise, wie insbesondere aus den Fig. 14 und 15 zu entnehmen ist, in der Weise einer Drehkulissenführung verwirklicht sein. Der zu einer Zugstange verlängerte Riegelbolzen 11 ist dabei in einer zylindrischen Hülse 9 geführt, auf der ein kurzer Zylinderabschnitt als Drehgriff 13 angeordnet ist. An den inneren Enden der Riegelbolzen 11 stehen in radialer Richtung kleine Zapfen 12 ab, die sich durch wendelförmige Langlöcher 10 in der Hülse 9 hindurch bis in axiale Langlöcher 15 in dem Drehgriff 13 hinein erstrecken. Die spiegelsymmetrische Anordnung der wendelförmigen Langlöcher 15 bewirkt, dass bei einer Betätigung des Drehgriffs 13 beide Riegelbolzen 11 zueinander entgegengesetzt bewegt werden. Der Benutzer kann demnach mit einer Hand den Drehgriff 13 betätigen und ohne Umgreifen das erste Trennelement 5 in die gewünschte Lage bewegen.

Nach dem Einbau der Laderaumabtrennung 4 in einen Kombinations-Personenkraftwagen ist das zweite Trennelement 16 im Bereich der Oberkante der Rücksitzlehne 20 durch eine Gelenkanbindung 17 um eine im wesentlichen horizontale und wenigstens annähernd quer zur Fahrzeuglängsrichtung verlaufende Schwenkachse D verschwenkbar festgelegt. Vorzugsweise ist das zweite Trennelement 16 dazu an der Rückseite der Rücksitzlehne 20 und wie dargestellt insbesondere an der Rückseite eines schmalen Mittelteils 21 der Rücksitzlehne 20 verschwenkbar angeschlagen. Besonders zweckmäßig ist die Schwenkachse C dieser Anbindung eng benachbart zu einer der lösbaren Scharnierverbindungen 8, 18 zwischen den beiden Trennelementen 5, 16. Unter ästhetischen Gesichtspunkten kann, wie insbesondere in den Fig. 1 und 2 dargestellt ist, eine Integration beider der Gelenkanbindung 17 in die benachbarte lösbare Scharnierverbindung 8, 18 gewünscht sein, wobei vorzugsweise die Schwenkachsen B, D eng beabstandet parallel verlaufen oder sogar zusammenfallen.

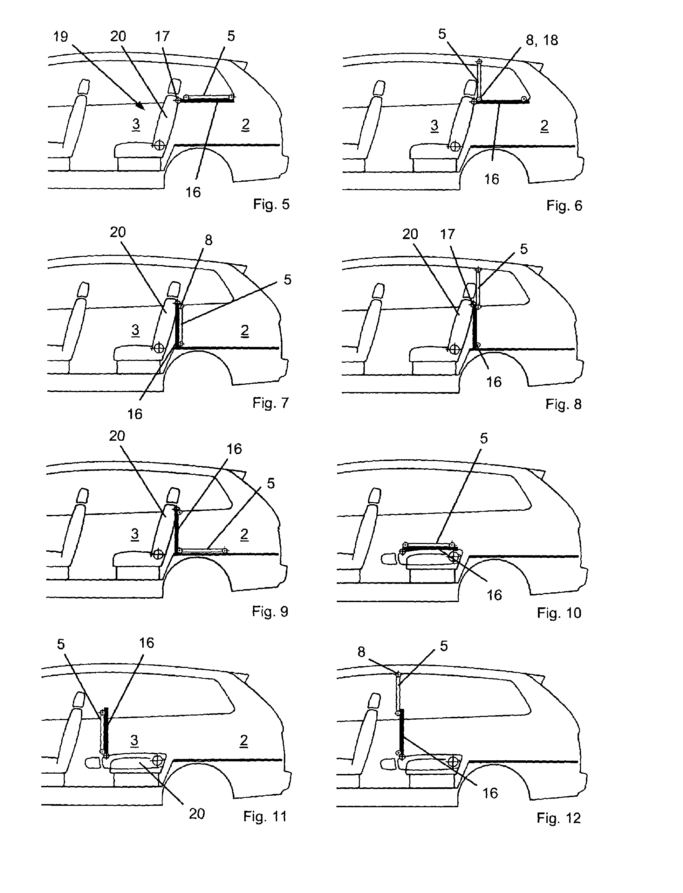

Die Fig. 5 bis 13 zeigen verschiedene Anordnungen der Laderaumabtrennung 4 für einige mögliche typische Gebrauchssituationen des Kombinations-Personenkraftwagens.

Falls gemäß Fig. 5 lediglich der Gepäckraum unterhalb der Scharnieranbindung 17 der Laderaumabtrennung 4 an der Rücksitzlehne 20 genutzt werden soll, bietet es sich an, das erste Trennelement 5 flach auf dem in einer horizontalen Lage arretierten zweiten Trennelement 16 abzulegen. Auf diese Art ist der Laderaum 2 nach oben abgedeckt und die Sicht vom Fahrerplatz durch die Heckscheibe wird nicht beeinträchtigt. In dieser Einstellung der Laderaumabtrennung 4 können auf der Oberseite der aufeinander liegenden Trennelemente 5, 16 leichte Gegenstände wie auf einer bekannten starren so genannten "Hutablagefläche" Platz finden. Vom Standpunkt der Sicherheit ist es allerdings vorzuziehen, solche Gegenstände zwischen den beiden Trennelementen 5, 16 einzuklemmen und dadurch sicher festzulegen. Diese Funktion wird besonders gut durch ein in der Art eines Netz- oder Gitterrahmens ausgebildetes erstes Trennelement 5 unterstützt. Die Festlegung des zweiten Trennelements 16 in der dargestellten horizontalen Lage erfolgt vorzugsweise durch seitliche Arretierungen an dessen hinterer Querkante. Insbesondere kann eine vorzugsweise beiderseitige Festlegung in einer horizontalen Führungsschiene vorgesehen sein, um bei einer Anbindung der Laderaumabtrennung 4 an der Rücksitzlehne 20 eines längsverschiebbar angeordneten Rücksitzes 19 dessen Einstellbereich nicht zu beeinträchtigen.

Abweichend von der vorbeschriebenen Anordnung kann gemäß Fig. 6 auch das erste Trennelement 5 über die vordere Scharnierverbindung 8, 18 zum zweiten Trennelement 16 in eine annähernd aufrechte Lage verschwenkt sein. Dadurch steht die Oberseite des zweiten Trennelements 16 als Ablagefläche für etwas größere Gegenstände zur Verfügung, die sich nicht in der Anordnung gemäß Fig. 5 zwischen den beiden Trennelementen 5, 16 fixieren lassen. Das obere Ende des ersten Trennelements 5 ist hierbei zweckmäßig im Bereich des Dachrahmens festgelegt, um eine ausreichend stabile Halterung zu gewährleisten. Diese Festlegung kann bei geeigneter Anordnung von korrespondierenden Rasten auch zweckmäßig durch die Verriegelungsmittel 8 erfolgen. Falls jedoch, wie mit Bezug auf Fig. 5 beschrieben, die Laderaumabtrennung 4 zusammen mit der Rücksitzlehne 20 verschiebbar sein soll, wird der beschriebenen karosseriefesten Festlegung eine stabile Verbindung zwischen der Oberkante des ersten Trennelements 5 und der hinteren Kante des zweiten Trennelements 16 vorzuziehen sein.

Gemäß Fig. 7 kann die Laderaumabtrennung 4 in ungefähr vertikaler Lage hinter der Rücksitzlehne 20 verstaut sein, wenn der Laderaum 2 nicht genutzt wird. Auch in dieser Anordnung können kleine und flache Gegenstände wie Stadtpläne und dergleichen zwischen den Trennelementen 5, 16 der Laderaumabtrennung 4 eingeklemmt verstaut werden. Dazu werden zweckmäßig die oberen, benachbart zur Gelenkanbindung 17 an der Rücksitzlehne 20 liegenden Verriegelungsmittel 8 gelöst, um die zu fixierenden Gegenstände von oben zwischen die beiden Trennelemente 5, 16 einlegen zu können.

Eine vollständige Abtrennung zwischen Fahrgastraum und dem Laderaum 2 bewirkt die in Fig. 8 gezeigte Anordnung der Laderaumabtrennung 4, bei der das erste Trennelement 5 über die vordere zu der Gelenkanbindung 17 an die Rücksitzlehne 20 benachbarten Scharnierverbindung 8, 18 nach oben in eine vertikale Lage aufgerichtet ist, während das zweite Trennelement 16 sich in der Lage der Anordnung gemäß Fig. 7 befindet.

Alternativ kann aus der vorbeschriebenen Einstellung gemäß Fig. 9 das erste Trennelement 5 auch über die hintere, d.h. die von der Gelenkanbindung 17 an die Rücksitzlehne 20 entfernte Scharnierverbindung 8, 18 nach unten auf den Laderaumboden abgelegt sein. Kleinere Gegenstände können bei Bedarf unter dem nach hinten in den Laderaum abgelegten ersten Trennelement 5 festgelegt werden.

Die Fig. 10 bis 13 beziehen sich auf die Nutzung des weiteren Raums 3 zur Beförderung von Ladegutstücken. Dazu ist die Rücksitzlehne 20 ganz oder teilweise nach vorne in eine annähernd horizontale Lage über der Sitzfläche abgelegt. Der Raum über der Rücksitzlehne 20 steht somit als erweiterter Laderaum 2, 3 zur Verfügung.

Gemäß Fig. 10 lässt sich die Laderaumabtrennung 4 vollständig auf der Rücksitzlehne 20 ablegen und dadurch verstauen. In dieser Anordnung wird die Laderaumabtrennung 4 allerdings keine Rückhaltefunktion für Ladegutstücke übernehmen.

Gemäß den Fig. 11 und 12 wird bei einer Nutzung des erweiterten Laderaums 2, 3 eine teilweise Rückhaltefunktion durch die Laderaumabtrennung 4 bewirkt, indem diese in eine annähernd vertikale Lage über der Gelenkanbindung 17 zur Rücksitzlehne 20 aufgerichtet ist. Falls nur ein unterer Teil des erweiterten Laderaums 2, 3 genutzt wird, reicht es erkennbar aus, gemäß Fig. 11 die beiden Trennelemente 5, 16 flach aufeinander angeordnet zu belassen. Die Stabilität der Laderaumabtrennung 4 wird dadurch erhöht und die Sicht vom Fahrerplatz zum Heckfenster bleibt unbeeinträchtigt. Zur umfassenden Nutzung des erweiterten Laderaums 2, 3 ist das erste Trennelement 5 gemäß Fig. 12 über die von der Gelenkanbindung 17 an die Rücksitzlehne 20 entfernte Scharnierverbindung nach oben verschwenkt und verschließt solcherart den oberen Teil des Durchtritts zwischen dem vorderen Fahrgastraum und dem weiteren Raum 3.

Gemäß Fig. 13 kann während der Nutzung lediglich eines unteren Teils des Laderaums 2 auch das zweite Trennelement 16 flach auf der Rückenlehne abgelegt sein, während das erste Trennelement 5 über die von der Gelenkanbindung 17 an die Rücksitzlehne 20 entfernte Scharnierverbindung dagegen in eine ungefähr vertikale Lage aufgerichtet ist. Vorteilhaft stellen in dieser Anordnung die Verriegelungsmittel 8 eine belastbare Verbindung zur Fahrzeugstruktur oder der Seitenverkleidung her.

Jedes der Trennelemente 5, 16 kann beispielsweise aus einer steifen Kunststoff-, Holz-, oder Metallplatte hergestellt sein. Um die rückwärtige Sicht des Fahrers möglichst wenig zu beeinträchtigen, wird wenigstens das erste Trennelement 5 mit einem Sichtfenster oder dergleichen versehen sein. Ein größeres Sichtfenster wird zweckmäßig durch eine Scheibe aus durchsichtigem Kunststoff, Sicherheitsglas oder durch ein Netz gegen den Durchtritt von Ladegut verschlossen sein. In einer besonders einfachen und leichten Ausführung kann jedes der Trennelemente 5, 16 als ein stabiler Rahmen 6 ausgeführt sein, in den ein Netz 7 oder ein ähnliches teil-durchsichtiges Flächengewirke eingespannt ist.

In einer weiteren Ausgestaltung der Laderaumabtrennung 4 weist eines der Trennelemente 5, 16 eine verschließbare Öffnung auf zum Durchladen von langen Gegenständen, insbesondere von Ski und Skistöcken. Hinsichtlich der Ladesituation gemäß den Fig. 8, 9 und 12 ist es besonders zweckmäßig, das zweite Trennelement 16 mit der vorgeschlagenen verschließbaren Öffnung auszustatten.

Für die Verwendung der Laderaumabtrennung 4 in Kombinations- Personenkraftwagen mit geteilter Rücksitzbank oder mit mehreren unabhängigen Rücksitzen 19 kann auch eine dementsprechend vertikale Teilung der Laderaumabtrennung 4 in Fahrzeuglängsrichtung vorgesehen sein. Alternativ kann auch die Laderaumabtrennung 4 an nur einem Teil der Rücksitzlehne 20 oder an nur einer von mehreren Rücksitzlehnen 20 verschwenkbar angebracht sein. Dies würde es erlauben, den anderen Teil der Rücksitzlehne 20 oder die anderen Rücksitzlehnen nach vorne umzulegen, wobei die Laderaumabtrennung 4 wahlweise in einer der Anordnungen gemäß den Fig. 5 bis 9 verbleiben könnte.

Wenngleich sich die vorstehende Beschreibung auf einen typischen Kombinations-Personenkraftwagen bezieht, eignet sich die erfindungsgemäße Laderaumabtrennung gleichermaßen für andere Fahrzeugtypen mit einem erweiterbarem Laderaum. Zu diesen anderen Fahrzeugtypen mit einem erweiterbarem Laderaum gehören insbesondere Limousinen oder gestreckte Coupés mit nach vorne umlegbarer Rücksitzlehne.

### Bezugszeichen:

- Kombinations- Personenkraftwagen: 1
- Laderaum: 2
- Weiterer Raum: 3
- Laderaumabtrennung: 4
- Erstes Trennelement: 5
- Rahmen: 6
- Netz: 7
- Verriegelungsmittel: 8
- Führungshülse: 9
- Langloch: 10
- Riegelbolzen: 11
- Zapfen: 12
- Handhabe: 13
- Griffhülse: 14
- Rille: 15
- Zweites Trennelement: 16
- Gelenkanbindung: 17
- Rastmittel: 18
- Rücksitzbank: 19
- Rücksitzlehne: 20
- Mittelteil: 21

## Patentansprüche

1. Laderaumabtrennung (4) für den erweiterbaren Laderaum (2, 3) eines Kraftfahrzeugs (1), aufweisend zwei Trennelemente (5, 16), wobei an dem ersten Trennelement (5) benachbart zu dessen Längskanten Verriegelungs- oder Rastmittel (8, 18) vorgesehen sind, durch die im Zusammenwirken mit weiteren Rast- bzw. Verriegelungsmitteln (18, 8) am zweiten Trennelements (16) zwei Scharnierverbindungen herstellbar sind.

2. Laderaumabtrennung (4) nach Anspruch 1, wobei die Schwenkachsen (B, C) der Scharnierverbindungen im wesentlichen parallel und zueinander beabstandet sind.

3. Laderaumabtrennung (4) nach einem der vorangehenden Ansprüche, wobei die weiteren Rast- bzw. Verriegelungsmittel (18, 8) an der Oberseite oder in der Mittelebene des zweiten Trennelements (16) angeordnet sind.

4. Laderaumabtrennung (4) nach einem der vorangehenden Ansprüche, wobei die Längskanten des ersten Trennelements (5) im wesentlichen parallel verlaufen.

5. Laderaumabtrennung (4) nach einem der vorangehenden Ansprüche, wobei ein Trennelement (5, 16) annähernd flach trapezförmig oder rechteckig ist.

6. Laderaumabtrennung (4) nach einem der vorangehenden Ansprüche, wobei an einer Längskante des ersten Trennelements (5) eine Handhabe (13)ausgebildet ist, die ein Betätigungsmittel (14) zum Betätigen der Verriegelungsmittel (8) einschließt.

7. Laderaumabtrennung (4) nach Anspruch 6, wobei an einem ausgeschnittenen Handgriff (13) eine mit den Verriegelungsmitteln (8) zusammenwirkende drehbare Griffhülse (14) vorgesehen ist.

8. Laderaumabtrennung (4) nach Anspruch 7, wobei die Verriegelungsmittel (8) einen federbelasteten Riegelbolzen (11) umfassen, der über eine Drehkulisse (10, 12, 15) durch die drehbare Griffhülse (14) betätigbar ist.

9. Laderaumabtrennung (4) nach einem der vorangehenden Ansprüche, wobei das zweite Trennelement (16) an einer seiner Längskanten eine Gelenkanbindung (17) zur verschwenkbaren Anbindung an die Karosserie oder ein Innenausstattungsteil (19) des Kombinations-Kraftfahrzeugs (1) aufweist.

10. Laderaumabtrennung (4) nach Anspruch 9, wobei die Schwenkachse (D) der Gelenkanbindung (17) mit der Schwenkachse (B) einer Scharnierverbindung im wesentlichen zusammenfällt.

11. Fahrzeuginnenausstattung für ein Kraftfahrzeug (1), aufweisend eine Laderaumabtrennung (4) nach Anspruch 9 und weiterhin eine Rücksitzbank (19), wobei die Laderaumabtrennung (4) mit der Gelenkanbindung (17) im Bereich der Rücksitzlehne (20) mit der Rücksitzbank (19) verbunden ist.

12. Fahrzeuginnenausstattung für ein Kraftfahrzeug (1) nach Anspruch 11, wobei die Rücksitzbank (19) zwei unabhängig verstellbare Einzelsitze und ein sich zwischen deren Rücksitzlehnen (20) erstreckendes Mittelteil (21) umfasst, an dem die Laderaumabtrennung (4) verschwenkbar angebracht ist.
